# EUROPEAN PATENT SPECIFICATION

(11) **EP 1 842 801 B1**
(45) Date of publication and mention of the grant of the patent: **21.07.2010**
(21) Application number: 07109710.9
(22) Date of filing: 23.06.2006
(51) Int. Cl.: B65D 88/54

(54) **Packaging device and buffer**
Verpackungsvorrichtung und Puffer
Dispositif d'emballage et tampon

(30) Priority: 04.07.2005 JP 2005195078; 29.03.2006 JP 2006090024
(43) Date of publication of application: 10.10.2007
(62) Divisional of application: 06013009.3
(73) Proprietor: Ricoh Company, Ltd., Tokyo 143-8555 (JP)
(72) Inventor: Naruishi, Moku, Tokyo 143-8555 (JP); Goda, Hideyuki, Tokyo 143-8555 (JP); Abe, Tsuyoshi, Tokyo 143-8555 (JP); Ishihara, Satoshi, Saitama 340-0164 (JP); Ishikawa, Sakae, Tokyo 143-8555 (JP)
(74) Representative: Schwabe - Sandmair - Marx

(56) References cited:
- DE-A1- 2 136 164
- DE-A1- 3 907 306
- DE-U1- 20 104 347
- US-A- 3 351 027
- US-A- 4 015 715
- US-A- 5 755 472

## Description

### BACKGROUND OF THE INVENTION

### 1. Field of the Invention

The present invention relates to a packaging device and a buffer, and more particularly, to a packaging device in which an article is mounted on a bottom base, side members are arranged in front and back and left and right of the bottom base, and a ceiling member is arranged at the top, and a buffer used together with the packaging device.

### 2. Description of the Related Art

It is one of major concerns of product manufacturers to transport articles that should be handled carefully at the time of transportation, for example, a manufactured product like an image forming apparatus, such as a copying machine, a printer, and a facsimile machine, from a production plant to an installation site of a user, without damaging the product. It is common to perform package designing, assuming that products are transported by various transportations such as a truck, a freight train, or a ship. Particularly, it is important to design the articles so as not be damaged during transportation, on the assumption that the articles are reloaded and temporarily stored in the middle of the transportation.

In the present physical distribution of articles, when manufactured products or goods are shipped from factories, there are two main transportation routes. One of the routes is that the products or goods are temporarily stored in a warehouse and delivered to users afterwards, and the other one is that the products or goods are directly delivered to the users from the manufacturer. In any case, it is an important issue to protect the articles from various external impacts and transportation environments, which the articles undergo in a process in which the articles are delivered to users and installed, and to deliver the articles to the users without degrading their quality. In other words, in a distribution process of the products, it is desired to provide a package variety, which can maintain the quality of the products with respect to vibrations and impacts, which are generated when the goods are transported by transportation such as a truck, and external hazards (an inertia or inclination due to shift), which occur in material handling such as reloading and storage to be performed at respective warehouse stations and work locations, and has an effective function with respect to transportability and material handling efficiency.

On the other hand, polyethylene terephthalate (PET) as a material of PET-bottles are lightweight, have excellent shock resistance and heat resistance, and have been used as various containers for industrial and domestic use, as general-purpose engineering plastics. Particularly, PET is used as familiar containers in the name of PET-bottles.
The production volume of PET-bottles is increasing, as containers of 500 ml, 350 ml, 330 ml, and 200 ml. On the other hand, a problem of the plastic waste including wasted PET-bottles is increasing. That is, if the PET-bottles are incinerated as a waste, there is a possibility that harmful substances can remain in the burnt ashes after incineration.

Furthermore, as recycling modes, there are material recycling methods in which materials are shredded without accompanying a chemical change to form a pellet, and used as a raw material, a thermal recycling in which materials are reused as a fuel for power generation combined with refuse incinerator, and chemical recycling in which resin is dissolved and decomposed to return it to a chemical material and used as a raw material. However, the recycling ratio has not been so high, and when the material is finally disposed of as a waste, there is the same problem mentioned above.

Furthermore, as one form of the reuse methods, there is an example in which collected PET-bottles are washed, refilled, and reused. However, washing and the like of the bottles are troublesome, and the current amount of reuse is not sufficient as a measure against the increasing amount of wasted PET-bottles.

Japanese Patent Application Laid-Open No. 2002-002813 discloses a buffer material for packaging that is arranged between a packaged article and an outer box to absorb external forces due to impacts or pressing forces. A plurality of the buffer materials for packaging is arranged on a flat board with cylindrical portions being parallel with each other, and a first bending groove arranged at a position where the flat board is bent, matched with the size of the packaged article, substantially parallel with the cylindrical portions, and a second bending groove with a notch in a V-shape arranged at a position where the flat board is bent, matched with the size of the packaged article, substantially orthogonal to the cylindrical portions, are respectively provided on the flat board. By bending the flat board at the first and the second bending grooves to cover the packaged article, at least two cylindrical portions are made to abut against the respective sides of the packaged article.

Japanese Patent Application Laid-Open No. 2001-335024 discloses a buffer material for packaging in which an opening of a plastic bottle is inserted into a depression of a thin-film molded plastic material having a plurality of depressions, to fix the thin-film molded plastic material and a plurality of plastic bottles, and these are arranged between a member to be packaged and a box.

US 3,351,027 relates generally to energy absorbing or cushioning devices and more particularly to a shock resistant, vibration isolating platform adapted to support and suspend a fragile load so as to protect it against injury and/or damage.

DE 39 07 306 A1 relates to a shock-absorbing rest. The shock-absorbing rest for pallets has an upper or loading panel which is spring-mounted by means of spring devices and is designed in such a way that it only needs to be placed on a pallet. The spring devices are supported on a lower panel which rests on the pallet. The rest engages with laterally arranged panels or side walls over the side edges of the pallet beyond a certain depth, thus ensuring stable guiding of the rest on the pallet.

Japanese Patent Application Laid-Open No. 2003-261179 discloses a buffer material for packaging arranged between a cardboard box and an article, which includes a paper sheet material and a plurality of paper pipes fitted to only a face where there are peaks of folds of the paper sheet material, where the paper pipes are fitted to a plurality of pipe fitting areas arranged via the folds.

Japanese Patent Application Laid-Open No. H9-267866 discloses a buffer material for packaging in which a buffer member is formed of laminated paper made of a substance having high recyclability and easy disposability, and provided with a buffer function, where, in a packaging body using the buffer materials, a single or a continuous block buffer members are mounted on sides of a container corresponding to a gap between the container and an article.

Under such circumstances, articles are generally packaged by forming the buffer members so as to match the shape of the article to be transported, and under current circumstances, cost and time of investment for plant and equipment, and designing with respect to packaging materials are required for each article. Furthermore, to perform such designing and control, types of the parts increase, and the parts control is complicated accordingly.

Therefore, it is desired that few types of the packaging device can handle various articles having different shapes and can be used repeatedly. That is, it is desired that after the article is delivered to a user, the packaging device is returned to a factory or the like and used repeatedly.

### SUMMARY OF THE INVENTION

It is an object of the present invention to at least partially solve the problems in the conventional technology.

In order to achieve the above-mentioned object, there is provided a package device according to claim 1.
Advantageous embodiments are defined by the dependent claims.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWING

Figs. 1A and 1B are perspective views of a packaging device according to a first embodiment of the present invention;
Figs. 2A to 2D are detailed views of a front member-locking device of the packaging device according to the first embodiment;
Fig. 3 is a front elevational view of a modified example of the front member-locking device of the packaging device according to the first embodiment;
Fig. 4 is a perspective view of the locking device shown in Fig. 3;
Fig. 5 is another perspective view of the locking device shown in Fig. 3;
Fig. 6 is a front elevational view of another modified example of the front member-locking device of the packaging device according to the first embodiment;
Fig. 7 is a perspective view of the locking device shown in Fig. 6;
Fig. 8 is another perspective view of the locking device shown in Fig. 6;
Fig. 9 is a front elevational view of a state when the front member is used as a tilted table, in the packaging device according to the first embodiment;
Fig. 10 is an enlarged front elevational view of the front member shown in Fig. 9;
Figs. 11A and 11B are enlarged front elevational views of an angle regulating unit for the front member shown in Fig. 9;
Fig. 12 depicts a contact portion of the front member according to another example;
Figs. 13A and 13B are enlarged diagrams of the front member shown in Fig. 9;
Figs. 14A and 14B are plan views of another example of the front member;
Figs. 15A to 15C are plan views of arrangement examples of PET-bottles in the packaging device according to the first embodiment;
Figs. 16A and 16B are plan views of arrangement examples of PET-bottles in the packaging device according to the first embodiment;
Fig. 17 is a side view of a bottom base of a packaging device according to a second embodiment of the present invention;
Fig. 18 is a front view of a bottom base of the packaging device according to the second embodiment;
Fig. 19 is a plan view of a bottom base of the packaging device according to the second embodiment;
Figs. 20A and 20B depict a front plate of the packaging device according to the second embodiment;
Figs. 21A to 21C depict a side plate of the packaging device according to the second embodiment;
Figs. 22A and 22B depict a rear plate of the packaging device according to the second embodiment;
Figs. 23A and 23B are side views of a top plate member of the packaging device according to the second embodiment;
Fig. 24 is a plan view of an arrangement example of PET-bottles in a packaging device according to a third embodiment of the present invention;
Figs. 25A to 25F are perspective views of an unloading state of and an unloading procedure in the packaging device according to the third embodiment;
Figs. 26A to 26D are perspective views of a collecting state of and a collection procedure in the packaging device according to the present embodiment;
Figs. 27A and 27B depict the front member of the packaging device according to the present embodiment;
Figs. 28A and 28B depict an unloading state in the packaging device according to the present embodiment; and
Figs. 29A and 29C depict another example of the packaging device according to the present embodiment.

### DETAILED DESCRIPTION OF THE PREFERRED EMBODIMENTS

Exemplary embodiments of the present invention will be explained below in detail with reference to the accompanying drawings.

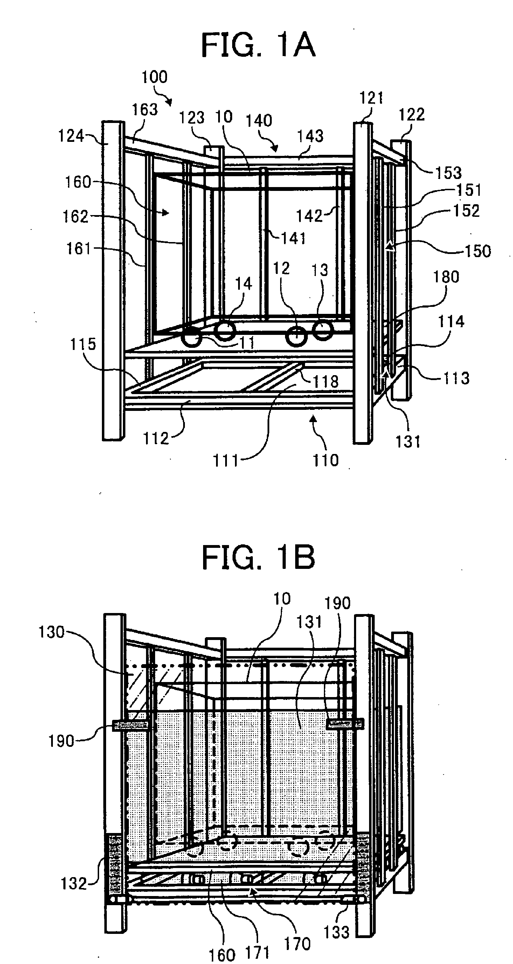

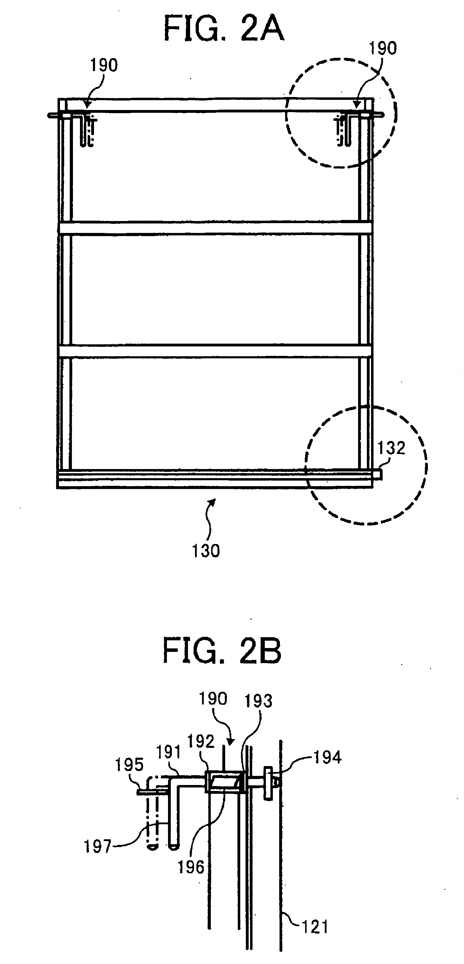

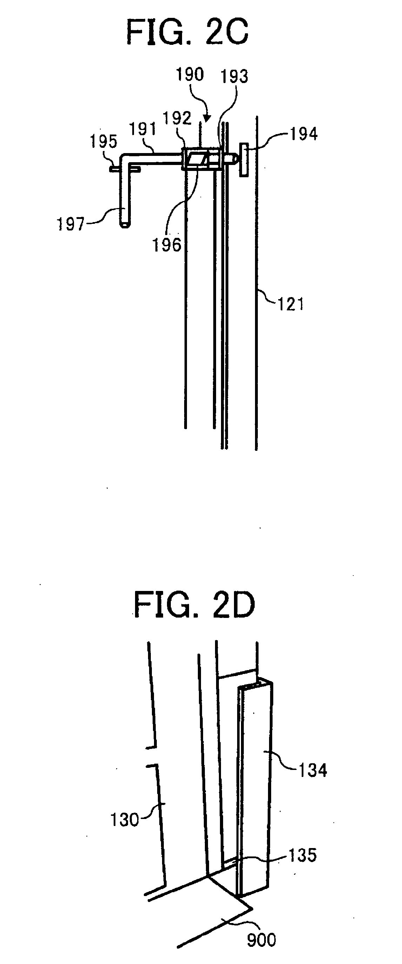

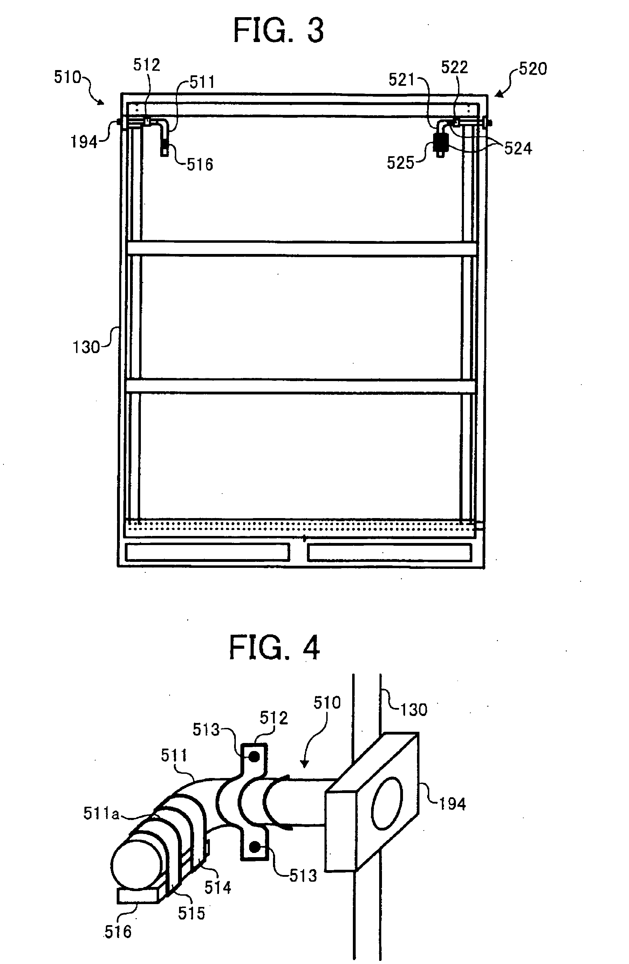

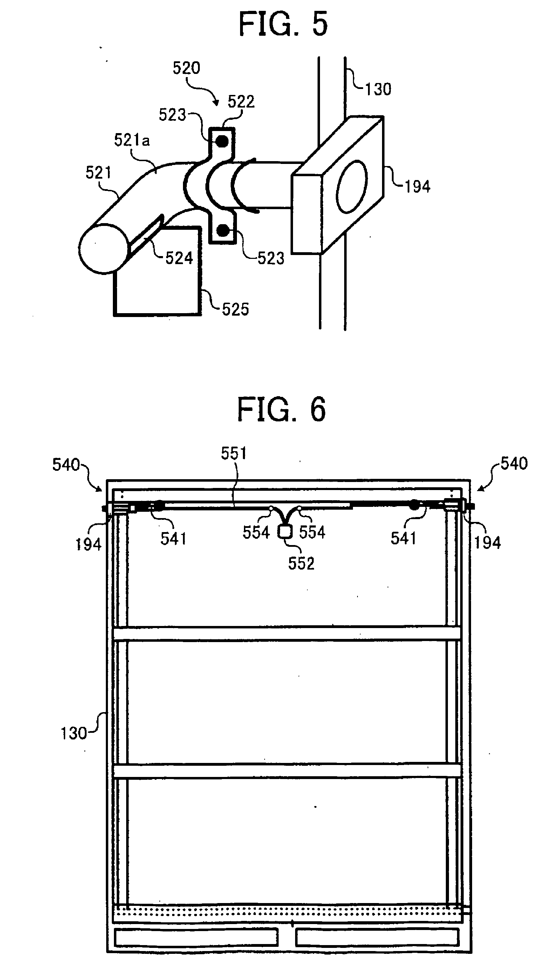

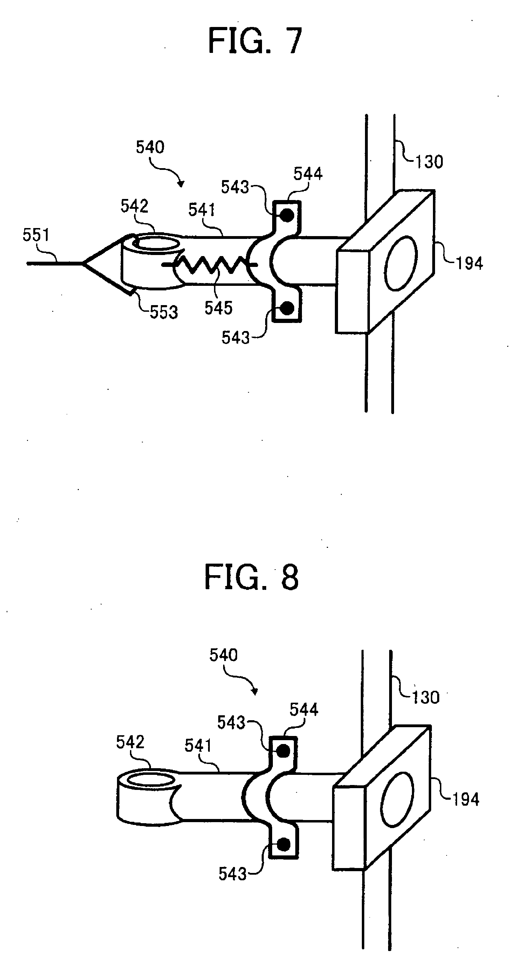

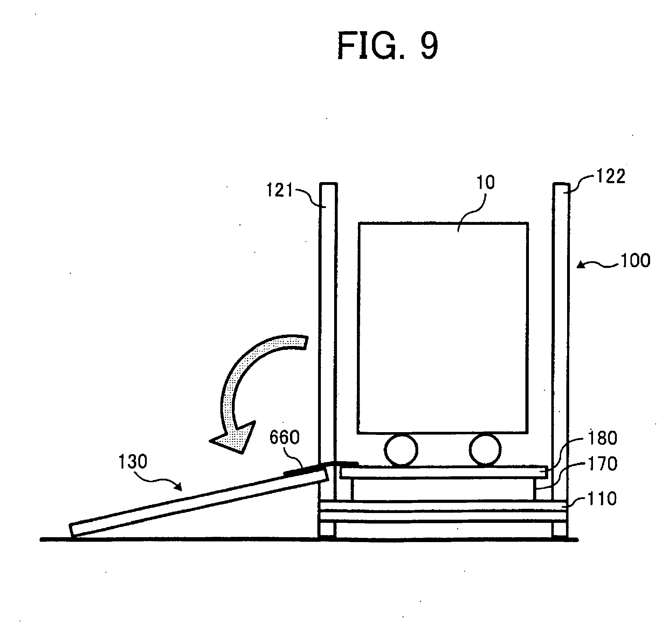

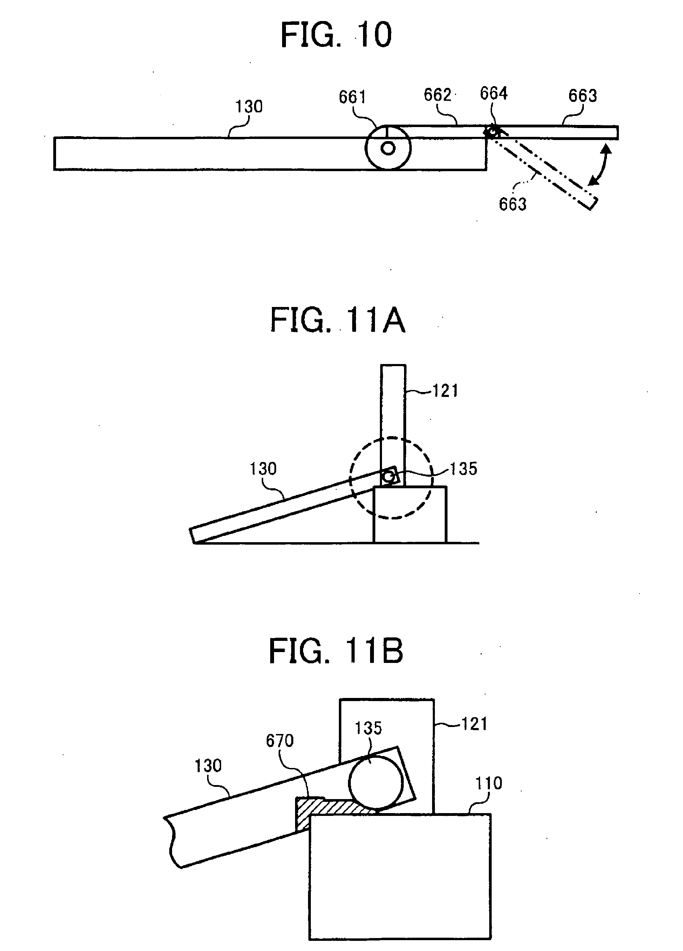

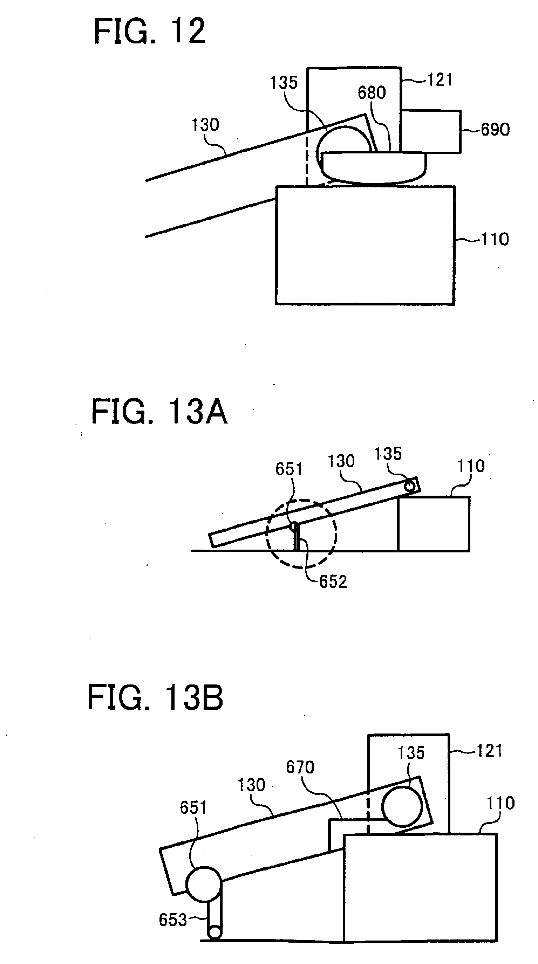

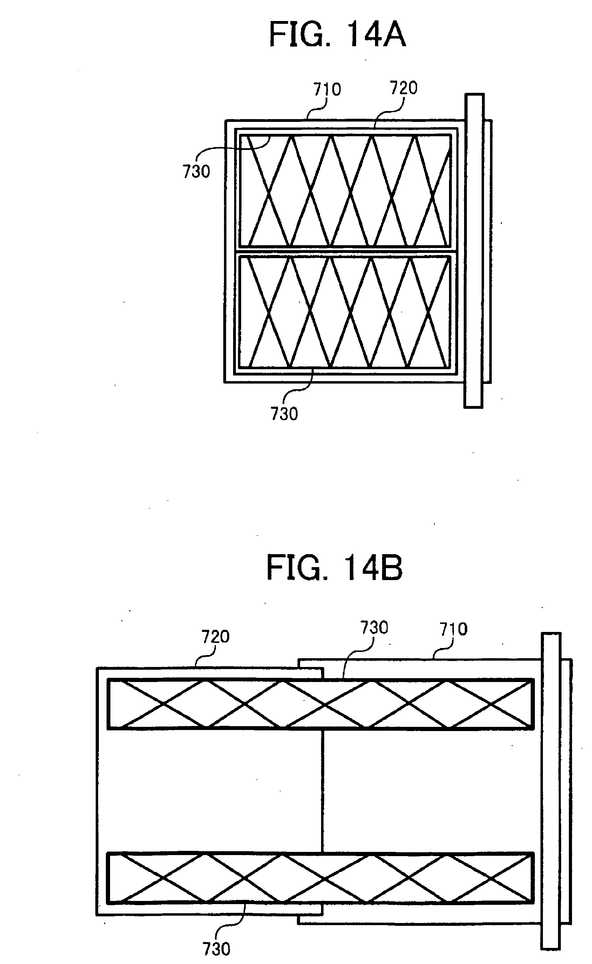

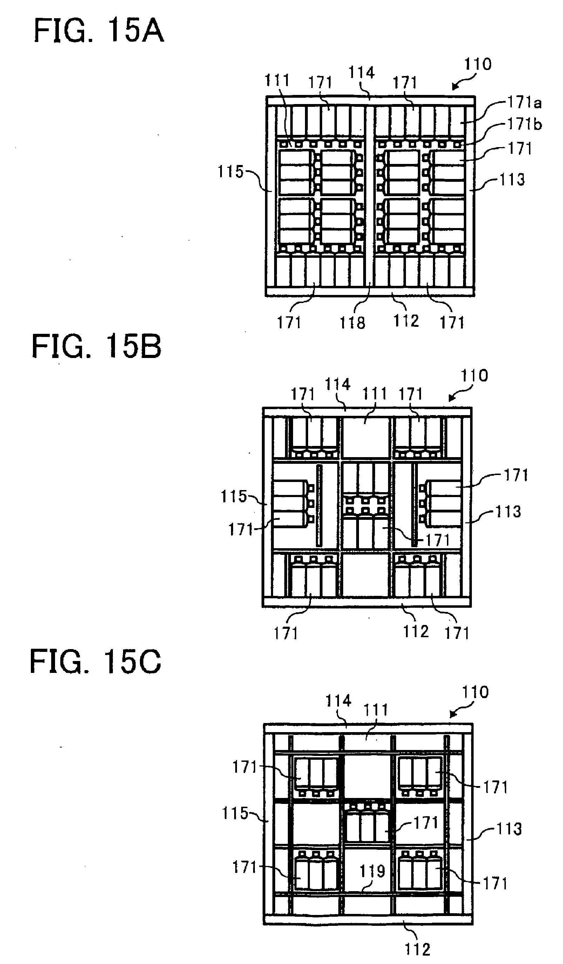

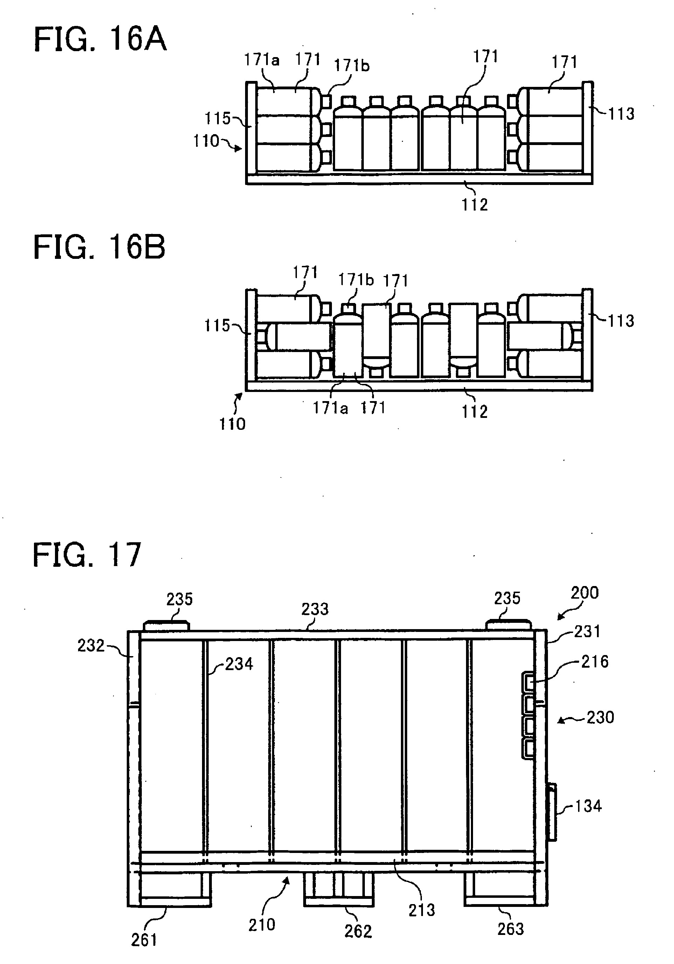

Figs. 1A and 1B are perspective views of a packaging device according to a first embodiment of the present invention: Fig. 1A depicts a state where a mounting base is lifted; and Fig. 1B depicts a state where an article is mounted thereon. Figs. 2A to 2D are detailed views of a front member-locking device of the packaging device according to the first embodiment: Fig. 2A is an entire perspective view of a front member; Fig. 2B is a perspective view of an unlocked state of the locking device; Fig. 2C is a perspective view of a locked state thereof; and Fig. 2D is an enlarged perspective view of a lower part of the front member. Fig. 3 is a front elevational view of a modified example of the front member-locking device of the packaging device according to the first embodiment. Fig. 4 is a perspective view of the locking device shown in Fig. 3. Fig. 5 is another perspective view of the locking device shown in Fig. 3. Fig. 6 is a front elevational view of another modified example of the front member-locking device of the packaging device according to the first embodiment. Fig. 7 is a perspective view of the locking device shown in Fig. 6. Fig. 8 is another perspective view of the locking device shown in Fig. 6. Fig. 9 is a front elevational view of a state when the front member is used as a tilted table, in the packaging device according to the first embodiment. Fig. 10 is an enlarged front elevational view of the front member shown in Fig. 9. Figs. 11A and 11B are enlarged front elevational views of an angle regulating unit for the front member shown in Fig. 9. Fig. 12 depicts a contact portion of the front member according to another example. Figs. 13A and 13B are enlarged diagrams of the front member shown in Fig. 9. Figs. 14A and 14B are plan views of another example of the front member: Fig. 14A depicts a contracted state of an inner frame shift unit; and Fig. 14B depicts a developed state thereof. Figs. 15A, 15B, and 15C are plan views of arrangement examples of PET-bottles in the packaging device according to the first embodiment. Figs. 16A and 16B are plan views of arrangement examples of PET-bottles in the packaging device according to the first embodiment.

According to the present embodiments, it is assumed that an article to be mounted is a copying machine, and the buffer member is PET-bottles. However, the article can be anything that requires buffering against vibrations and impacts, and the buffer member is not limited to the PET-bottles, and various types of buffer members having the same or similar structure and operation can be employed.
It is a matter of course that a buffer member can be created exclusively for the present invention.

There are various types of PET-bottles used as the buffer member, such as (1) bottles for carbonated beverages (cola, cider, and the like), (2) bottles for high-temperature filled beverages (fruit drink, sports drink, tea, coffee, and the like), (3) bottles for light carbonated beverages sterilized after filling (light carbonated fruit drink or lactic drink), and (4) bottles for aseptic filling. Furthermore, as for an external shape or sectional shape, there are round shapes, rectangular shapes (many of them are shapes rounded at four corners or shapes obtained by cutting four corners and rounding the corners to form a deformed octagon), and shapes mixed with circle and square. In the present invention, any of these shapes can be employed.

The bottles for carbonated beverages are referred to as a pressure-resistant bottle, which can endure an inner pressure increased by a gas generated from a beverage. The bottles for high-temperature filled beverages are used for beverages, which do not contain carbon dioxide, and referred to as a heat-resistant bottle, whose opening is formed so as to be able to endure deformation due to heat at the time of filling. The bottles for light carbonated beverages sterilized after filling are referred to as a heat-resistant and pressure-resistant bottle having both heat resistance and pressure resistance. The bottles for aseptic filling are used for a method (aseptic filling) in which a content and bottles are separately sterilized before filling, the content is filled in the bottles in a sterilized room, and the bottles are sealed with sterilized caps, and referred to as an aseptic bottle. In this case, the entire bottle is generally transparent.

A packaging device 100 according to the first embodiment is for packaging a product 10, and as shown in Figs. 1A and 1B, four casters 11, 12, 13, and 14 are fitted to the product 10. The packaging device 100 includes a bottom base 110, four support members 121, 122, 123, and 124 arranged upright on four corners of the bottom base 110, and also serving as legs of the bottom base 110, a front member 130 detachably fitted to the bottom base 110 and forming a front wall, a rear member 140 fitted to the bottom base 110 and forming a rear wall, a side member 150 fitted to the bottom base 110 and forming a right wall, a side member 160 forming a left wall, a buffer member 170 arranged on the bottom base 110 and formed of PET-bottles 171, which are multiple sealed containers containing a gas sealed therein, and a mounting base 180 arranged on the buffer member 170, on which an article is mounted.

The packaging device 100 according to this embodiment includes locking devices 190, which fix the front member 130 to the support members 121 and 124, between the front member 130 and the support members 121 and 124.

The bottom base 110 is made of a steel material, and includes a bottom plate 111, and frame members 112, 113, 114, and 115 provided on four sides of the bottom base 110. The support members 121, 122, 123 and 124 formed of a square pipe are arranged upright on four corners of the bottom base 110. The lower parts of the support members 121, 122, 123 and 124 protrude downward from the bottom plate 111, to form the legs, thereby forming a space below the bottom base 110, into which forks of a forklift are inserted.

The bottom base 110 includes the buffer member 170 formed by arranging a plurality of PET-bottles regularly, and a flat mounting base 180 is arranged on the buffer member 170. The product 10 is mounted on the mounting base 180 and packaged. Preferably, the mounting base is made of hard rubber, polypropylene (PP), or polyethylene (PE), since these materials have rigidity and appropriate resilience.

According to the first embodiment, on the bottom plate 111 of the bottom base 110, a partition 118 is arranged as shown in Fig. 15A in the buffer member 170, and the PET-bottles 171 are arranged over the whole surface of the partitioned bottom plate 111 in a predetermined pattern. As required, as shown in Fig. 15B, a plurality of partitions 119 can be arranged in a predetermined pattern to arrange the PET-bottles 171 in an appropriate pattern away from each other, or as shown in Fig. 15C, the PET-bottles 171 can be arranged so as to match the positions of the casters 11, 12, 13, and 14 of the product 10. In this example, arrangement directions of body parts 171a and caps 171b of the PET-bottles 171 are made the same.

Another example in which the PET-bottles 171 are arranged in the same direction is shown in Fig. 16A. Still another example in which the arrangement directions of the body parts 171a and the caps 171b of the PET-bottles 171 are made alternate is shown in Fig. 16B. In this example, the resilience of the buffer members 170 can be made uniform.

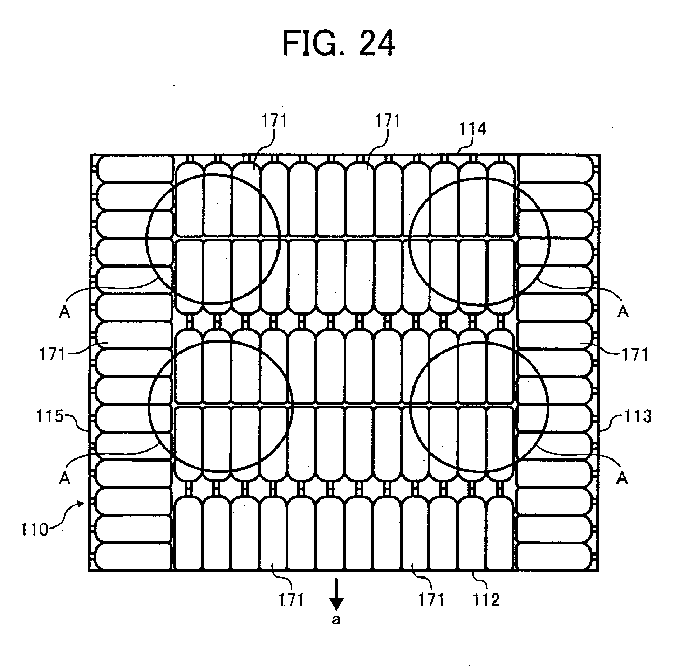

Fig. 24 is another arrangement example of the PET-bottles 171. In this example, a number of PET-bottles 171 are placed over the bottom plate 111, without providing the partition. In this example, at the time of placing the PET-bottles 171, the PET-bottles 171 are placed horizontally. As for the shape of the PET-bottles 171, the body part is at the highest position, and a portion from the end of the body part to the cap becomes lower than the body part. If the caps of the PET-bottles 171 face each other, a gap is formed between the mounting base 180 and the caps in the portion where the caps face each other, and the caster is not stabilized in this portion. In this example, therefore, the body parts makes contact with each other, to increase contact areas between the mounting base 180 and the body parts, so that a load is uniformly distributed (parts A in Fig. 24). Furthermore, in this example, the product 10 is unloaded in a direction indicated by arrow a, and if the height is not fixed at the time of shifting the product from the mounting base 180 to the front member 130, the casters of the product 10 cannot ride across the front member 130. Therefore, the PET-bottles 171 are arranged so that the body parts thereof are arranged in the whole area of the end portion on a near side. It is desired that the PET-bottles to be arranged have a flat portion in the body part thereof, since the upper face thereof becomes flat to increase the contact area when the PET-bottles 171 are placed over the bottom plate.

As shown in Figs. 1A and 1B, a crossbar 153 forming the right side member 150, and two vertical bars 151 and 152 for connecting the crossbar 153 and the frame member 113 are provided between the support members 121 and 122.

Furthermore, a crossbar 143 forming the rear member 140, and two vertical bars 141 and 142 for connecting the crossbar 143 and the frame member 114 are provided between the support members 122 and 123.

Similarly, a crossbar 163 forming the left side member 160, and two vertical bars 161 and 162 for connecting the crossbar 163 and the frame member 115 are provided between the support members 123 and 124.

As shown in Fig. 2A, the front member 130 is formed, by arranging a plate member 131 and reinforcing members 252, 253, 255, and 256 on four sides of the plate member 131, and arranging two reinforcing bars 257 and 258 horizontally. A turning shaft 135 is inserted into the inside of a U-shaped holder 134 shown in Fig. 2D from above, so that the turning shaft 135 can be turned to the near side and the far side of the packaging device 100, and can be freely movable in a vertical direction. According to this configuration, the front member 130 is turned to the near side of the packaging device 100, and the other end of the turning shaft 135 is placed on the floor, thereby enabling the use of the front member 130 as a tilted table to be used for loading and unloading of the article.

Furthermore, the locking devices 190 for fixing the front member 130 to the support members 121 and 124 are provided, as shown in Figs. 2A, 2B, and 2C, on the front member 130 and the support members 121 and 124. According to the first embodiment, as shown in Figs. 2A and 2C, the locking device 190 can slidably and rotatably support a handle 191 by supports 192 and 193, so that the handle 191 can be inserted into and pulled out from a hole in a lock plate 194 provided on the support member 121. In Fig. 2B and 2C, reference numeral 195 denotes a handle fixing member, 196 denotes a spring for pushing out the handle, and 197 denotes a holder of the handle.

By using the locking devices 190, the front member 130 can be turned to an unlocked state (Fig. 2B) or to a locked state (Fig. 2C) with respect to the support members 121 and 124.

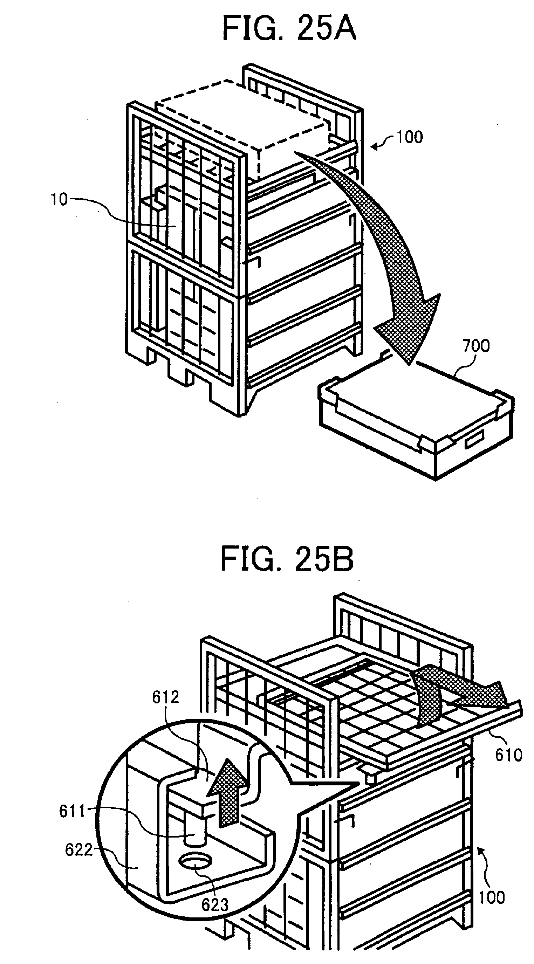

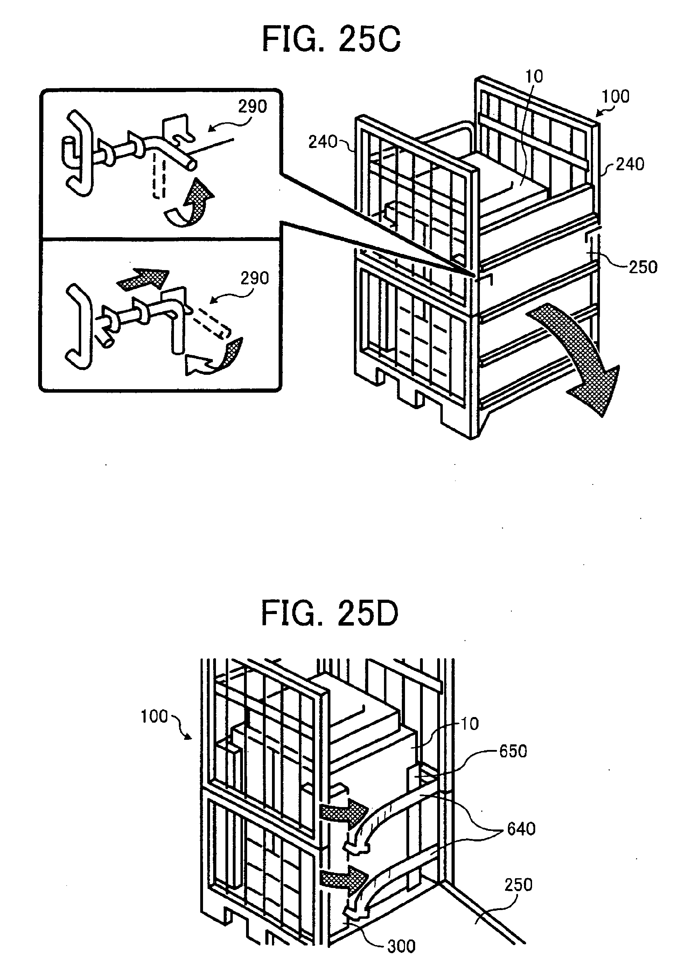

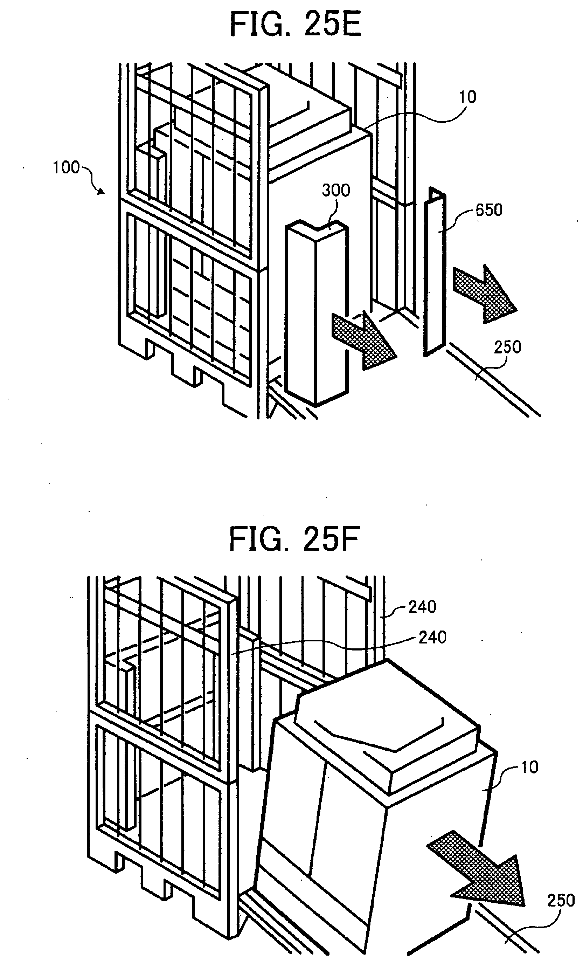

An unloading procedure of the packaging device 100 according to the first embodiment is explained with reference to Figs. 25A to 25F. Firstly, a box 700 mounted on a top plate member 610 is unloaded from the near side of the packaging device (Fig. 25A). A latching protrusion 611 of the top plate member 610 is then detached from a hole 623 of a sliding guide 622, and the top plate member 610 is pulled to the near side of the packaging device and detached therefrom (Fig. 25B). A lock of a locking device 290 on a front member 250 is released, to bring down the front member 250 to the near side (Fig. 25C). Furthermore, belts 640, a buffer 300 on the near side of the apparatus, and a second buffer 630 are removed, and an article is brought down to the near side of the apparatus by using a slope formed by the front member 250, thereby finishing unloading.

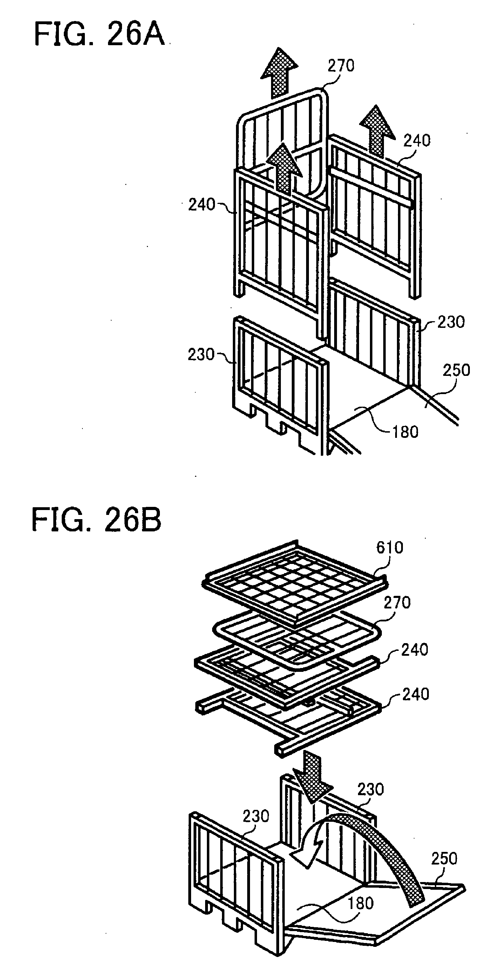

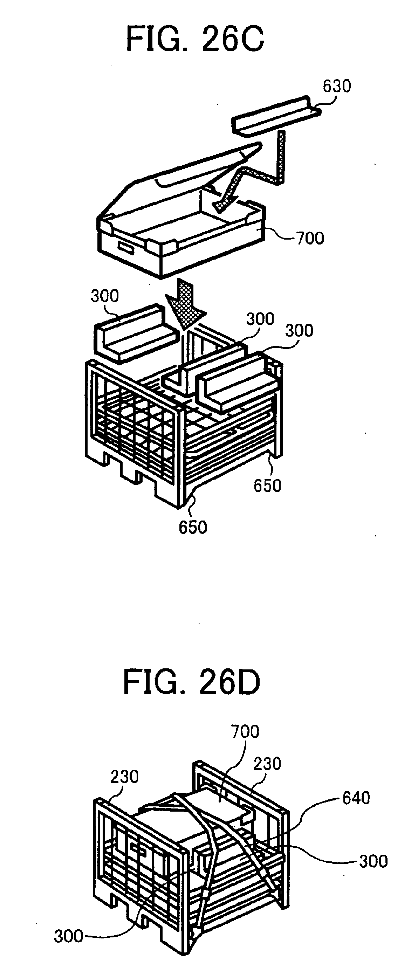

Upon completion of unloading, when an old copying machine is collected from a delivery destination, the old copying machine can be packaged and collected by the above procedure backwards. Only a case of collecting the packaging device 100 is explained below, assuming that there is no article to be collected at the delivery destination. As shown in Figs. 26A to 26D, a rear member 270 and upper side members 240 are pulled out upwards (Fig. 26A). The front member 250 is folded toward the mounting base 180 side, and the rear member 270, the upper side members 240, and the top plate member 610 are stacked thereon. The two buffers 300 placed back to back and one buffer 300 are arranged with a space therebetween on the stacked members, and the box 700, which has been mounted on the top plate, is arranged in the space. The second buffer 630 can be placed in the box, or a bag for protecting the article can be folded and placed therein. Lastly, the belts 640, which have positioned the article, are respectively latched to belt engagement holes, thereby fixing the members. Thus, a plurality of members constituting the packaging device can be reliably collected in a compact manner, without dropping.

According to the first embodiment, the front member 250, the upper side members 240, a top plate member 280, and the rear member 270 are formed in a size that can be accommodated within the face of the mounting base 180, such that when these members are stacked, the uppermost position at the time of stacking the buffers and the box on these stacked members becomes equal to or lower than the position of the crossbars 243. Furthermore, when the two buffers 300 placed back to back and another buffer 300 are arranged with a space therebetween, and the box 700, which has been mounted on the top plate, is arranged in the space, the length between ends of the buffer 300 is smaller than a width of the mounting base 180, and smaller than the width of the front member 130, the upper side members 240, the top plate member 280, and the rear member 270. Accordingly, respective members can be reliably collected without dropping due to locking by the belts 640.

According to this configuration, there is no excessive space, and even the box 700 for carrying accessories to be mounted on the top plate member 610 can be put in the packaging device, thereby increasing collection efficiency. At the time of collection, space-saving of the packaging device can be realized by mounting legs 261 and 263 on a guide plate 235 of the crossbar 243 of the folded packaging device, and stacking the packaging device vertically for collection.

An unloading operation until the article is unloaded can be performed from the near side of the packaging device. Therefore, an operator does not need to perform any operation from various directions, thereby enabling improvement in the work efficiency. Although not shown, if the unloading operation can be seen from outside of the front member (the front of the packaging device), the work efficiency is improved for the operator who performs operations from the front of the packaging device. In addition, for example, if the collection procedure is shown on the box 700 arranged at the uppermost position in Fig. 26D, the procedure can be read and performed until the box 700 is fastened by the belts, thereby improving the work efficiency.

Fig. 3 is a front elevational view of a modified example of the front member-locking device of the packaging device according to the first embodiment. Fig. 3 is an example in which a locking device 510 according to a first modified example is arranged on the left side of the front member 130, and a locking device 520 according to a second modified example is arranged on the right side thereof.
For convenience, respective locking devices 510 and 530 are provided on one front member 130. However, in practice, these locking devices are respectively arranged on the left and right sides of one front member 130.

The locking device 510 shown on the left side in Fig. 3 slidably and rotatably supports a handle 511 by a support 512 fixed to the front member 130 by screws 513, so that the handle 511 can be inserted into and pulled out from a hole in the lock plate 194 provided on the support member 121. In this example, a permanent magnet 516 is attached to a bent portion 511a of the handle 511 by belts 514 and 515, and the state of the handle 511 can be fixed by an attraction of the permanent magnet 516 by pressing the bent portion 511a to the front member 130 made of iron.

Similarly, the locking device 520 shown on the right side slidably and rotatably supports a handle 521 by a support 522 fixed to the front member 130 by screws 523, so that the handle 521 can be inserted into and pulled out from a hole in the lock plate 194 provided on the support member 121. In this example, a hook-and-loop fastener 524 is adhered to a bent portion 521a of the handle 521, and another hook-and-loop fastener 525, to which the hook-and-loop fastener 524 is adhered, is adhered to the front member 130. In this example, by pressing the hook-and-loop fastener 524 at the bent portion 521a against the hook-and-loop fastener 525, the state of the handle 521 can be fixed by a fixing strength of the hook-and-loop fasteners 524 and 525.

Fig. 6 is a front elevational view of another modified example of the front member-locking device of the packaging device according to the first embodiment. A locking device 540 in this example forms a ring portion 542, as shown in Fig. 8, at one end of a handle 541 in a straight bar shape, and slidably and rotatably supports the handle 541 by a support 544 fixed to the front member 130 by screws 543, so that the handle 541 can be inserted into and pulled out from a hole in the lock plate 194 provided on the support member 121.

In the locking device 540 according to this example, as shown in Fig. 7, the locking devices 540 provided at the left and right of the front member 130 are connected with each other by attaching a string type member 551 such as a wire between the ring portions 542 of the locking devices 540 via a fitting ring 553, and a handle 552 is provided at the center of the string type member 551. The handle 552 is fitted to the front member 130 by a guide member 554.

When a permanent magnet is provided in the handle 552, the handle 552 can be stuck to the front member 130. Instead of the permanent magnet, one of the hook-and-loop fasteners can be provided on the handle 552, and the other can be provided on the surface of the front member 130.

According to the first embodiment, as shown in Fig. 9, the front member can be used as the tilted table. Fig. 9 is a front elevational view of a state when the front member is used as the tilted table. According to the first embodiment, a cover member 660 includes, as shown in Fig. 10, a first plate 662 fitted to a shaft 661 rotatably provided on the front member 130, and a second plate 663 fitted to a shaft 664 provided on the first plate 662 in a freely turnable manner. In this example, the two plates 662 and 663 can turn, matched with the height of the front member 130 and the mounting base 180, to dissolve a gap and a difference in level between the front member 130 and the mounting base 180, thereby enabling smooth shift of the product 10.

As shown in Figs. 11A and 11B, a crossbar member 670 is fitted to the front member 130, which comes in contact with the bottom base 110 when the front member 130 is turned about the turning shaft 135 and used as the tilted table. The crossbar member 670 is an edge engagement member having rigidity, and can distribute the weight of the product 10 due to the contact with the bottom base 110, and can restrict a fitting position of the front member 130.

As shown in Fig. 12, an angle regulating member 680 can be provided on the front member 130. The angle regulating member 680 is stuck to the front member 130, and turns about the turning shaft 135, so as to restrict the turning angle of the front member 130, which makes contact with a member 690 fixed to the bottom base 110.

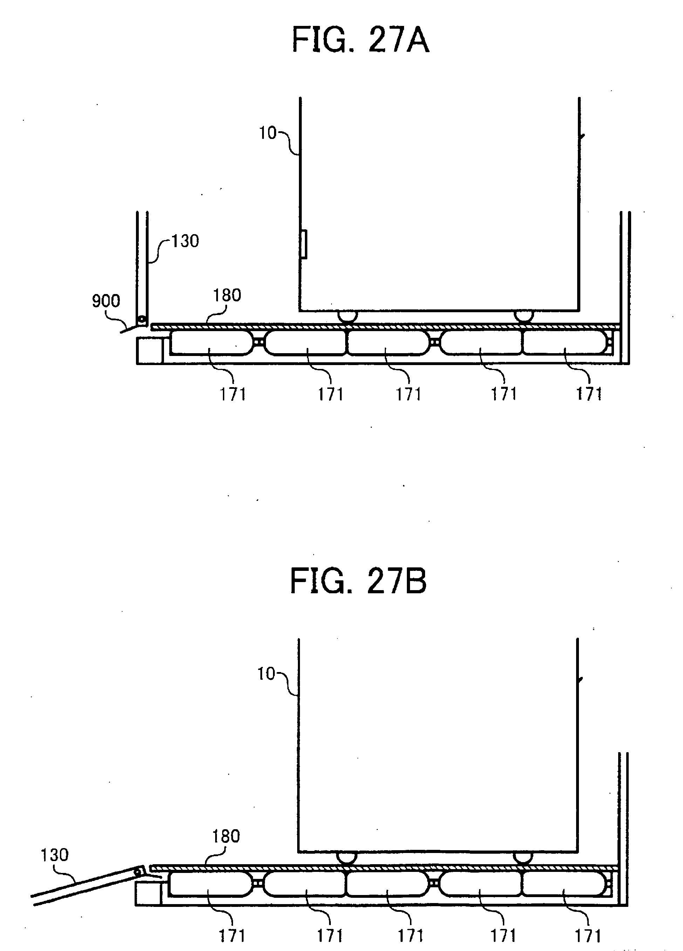

Furthermore, as shown in Figs. 27A and 27B, an angle regulating member 900 can be provided at the bottom of the front member 130. The angle regulating member 900 is provided over the whole area on the front of the front member 130 in a cross direction thereof, and is configured so as to protrude from the packaging device 100 in an upright state of the front member 130. The amount of protrusion is preferably determined so as not to deteriorate the load efficiency due to the angle regulating member 900, when other packaging devices are arranged horizontally and transported.

As shown in Fig. 27B, the angle regulating member stops at a position where the angle regulating member abuts against the bottom surface of the mounting base 180 when the front member 130 is brought down to the near side of the packaging device. At this time, the height positions of the turning shaft 135 of the front member 130 and the mounting base 180 are substantially the same, to prevent that the casters 11, 12, 13, and 14 are caught by the front member, when the product 10 is unloaded from the right to the left in Figs. 27A and 27B. Since the whole area of the mounting base 180 are only mounted on the upper faces of the PET-bottles, when the product 10 is in parts A shown in Fig. 24, the positions of the casters 11, 12, 13, and 14 span over a plurality of PET-bottles. As a result, the mounting base 180 can be displaced vertically as a whole.

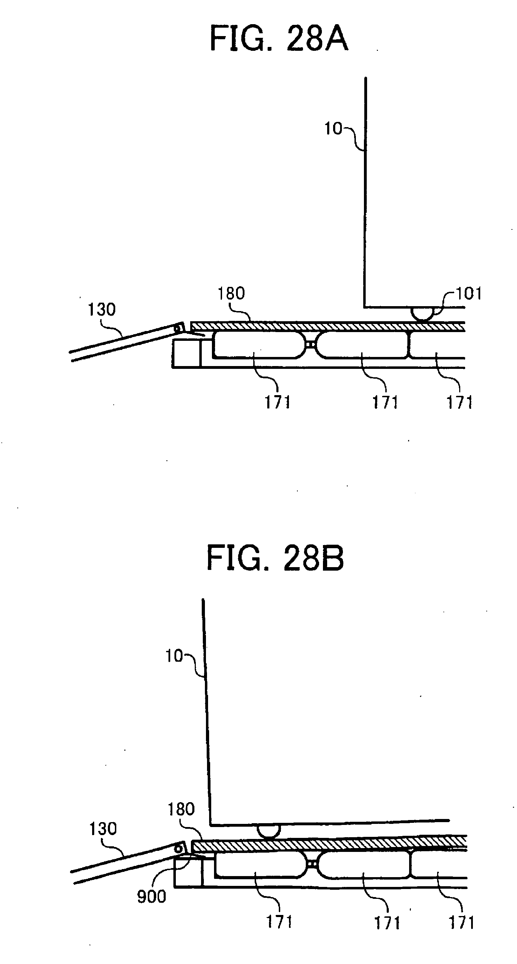

However, when the product 10 is shifted from the right to the left in Figs. 27A and 27B, that is, from a state shown in Fig. 28A to a state shown in Fig. 28B, if the casters 11, 12, 13, and 14 are located at an edge on the "a" side of the bottom base 110 shown in Fig. 24, the weight of the casters concentrate on the PET-bottles 171 at the edge on the "a" side of Fig. 24. Accordingly, the mounting base 180 displaces downward as compared to a position shown in Fig. 28A and 28B.

In this case, since the mounting base 180 presses the upper face of the angle regulating member 900, the front member 130 turns about the turning shaft 135, and the turning shaft 135 side of the front member 130 displaces downward in the U-shaped holder 134, so that the front member 130 becomes the same height as that of the upper face of the downward displaced mounting base 180. Accordingly, the position of the front member can be adjusted, accompanying the displacement of the height position of the mounting base due to collapse (buffer) of the PET-bottles 171. Thus, the product 10 can be smoothly unloaded without being caught by the turning shaft 135 of the front member. According to the packaging device according to the first embodiment, even when the height is different according to the type of the PET-bottles, the height of the turning shaft 135 side of the front member 130 in the state with the front member 130 being brought down to the near side of the apparatus and the height of the mounting base 180 can be made substantially the same by the angle regulating member 900 and the U-shaped holder 134. Accordingly, a stable unloading operation can be achieved.

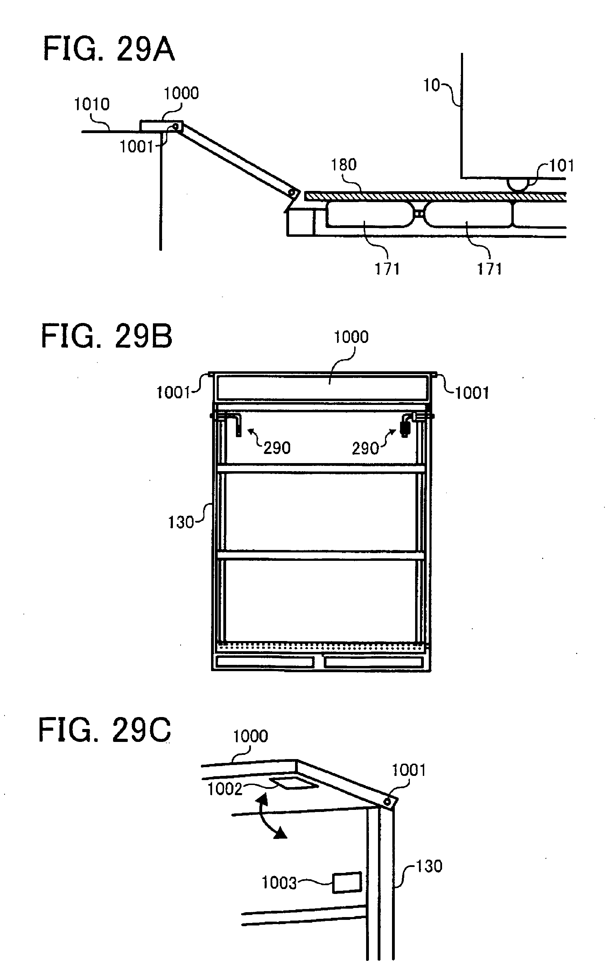

Furthermore, when the product 10 is unloaded to an unloading spot 1010 arranged at a higher position than the upper face of the mounting base, as shown in Fig. 29A to 29C, if an auxiliary base 1000, which can be turned to an opposite direction to the direction of the turning shaft 135 of the front member 130, is mounted on an unloading face, unloading can be performed easily. At this time, the auxiliary base 1000 is formed separately from the front member 130, and pivotally fitted to the front member 130 via a turning shaft 1001. Furthermore, the auxiliary base 1000 has a size that does not interfere with the locking device 290, when the auxiliary base 1000 is turned toward the front member 130 side, or the locking device 290 is arranged so as not to interfere with the auxiliary base 100D.

As shown in Fig. 29C, a fixing member 1002 is arranged on the rear face of a slope formed by the auxiliary base 1000, and a fixing member 1003 is arranged on the front face of the front member 130. Consequently, when the auxiliary base 1000 is turned to the front member 130 side, the fixing member 1002 on the auxiliary base 1000 is fixed to the fixing member 1003 on the front member 130. The fixing members 1002 and 1003 are formed of a material such as a magnet or a hook-and-loop fastener. In this device, when the front member 130 is closed as shown in Fig. 29C, members of a not-so-thick material, other than the magnet and the hook-and-loop fastener, can be used.

It is assumed here that the packaging device according to the first embodiment is used repeatedly. Since the fixing member 1002 is brought into contact with the floor or the like, as shown in Fig. 29C, it is likely to become dirty. Therefore, the fixing member 1002 is formed of a material, whose fixing power at the time of closed state as shown in Fig. 29B hardly deteriorates, even when it is used repeatedly as shown in Fig. 29A. As a result, the maintainability of the packaging device is improved, and fixation is released at the time of transportation and collection, thereby preventing any contact with another packaging device mounted adjacent to the packaging device.

In the above example, while it is shown that the auxiliary base 1000 is folded toward the inside of the front member 130 at the time of arranging the front member 130 upright, the auxiliary base 1000 can be folded toward the outside of the front member 130. In this case, in a state where the auxiliary base 1000 can be turned at the time of packaging, the auxiliary base 1000 comes in contact with the product 10 or an adjacent packaging device. Therefore, like the above example, it is preferable to provide the fixing member on the sides where the auxiliary base 1000 and the front member 130 come in contact with each other.

According to the first embodiment, the front member 130 and the auxiliary base 1000 are formed as separate members, but the present invention is not limited to this configuration. For example, the front member 130 can be divided vertically, and the upper part thereof can be used as an auxiliary base. In this case, if the locking device 290 is provided on the divided upper member, so that the entire front member 130 can be fixed to the apparatus body, the fixing members 1002 and 1003 are not required.

Furthermore, according to the first embodiment, as shown in Fig. 13A, a plate-like contact member 652 is provided on the surface of the front member 130, one end of which is fitted so as to be freely turned on a shaft 651, and suspended in a state where the front member is turned and arranged as the tilted table, and the other end of which is brought into contact with the ground. According to the first embodiment, when the front member 130 is used as a tilted table, the weight of the product 10 acting on the front member 130 can be shared with the floor. As shown in Fig. 13B, when the contact member is formed as a handle 653 of the front member 130, and the front member 130 is used as the tilted table, the point thereof can be brought into contact with the floor.

Moreover, according to the first embodiment, as shown in Figs. 14A and 14B, the front member 130 can be formed of an outer frame 710 and an inner frame 720 arranged inside of the outer frame 710, and the inner frame 720 can be formed so as to protrude from the inside of the outer frame 710 toward a direction opposite to the bottom base. In this case, an inner frame moving unit 730 is provided between the outer frame 710 and the inner frame 720.

The inner frame moving unit 730 has a retractable pantograph structure, so as to serve as a reinforcing member of the inner frame.

Furthermore, according to the first embodiment, not only the impact against the article, which occurs during transportation, can be alleviated by the buffer, but also the packaging device can be used repeatedly. Accordingly, the investment for plant and equipment, the cost, and the time of packaging can be reduced, and parts control can be facilitated.

In addition, since the mounting base can be formed by using PET-bottles or materials having a similar shape, the PET-bottles are not disposed of as a waste and can be reused.

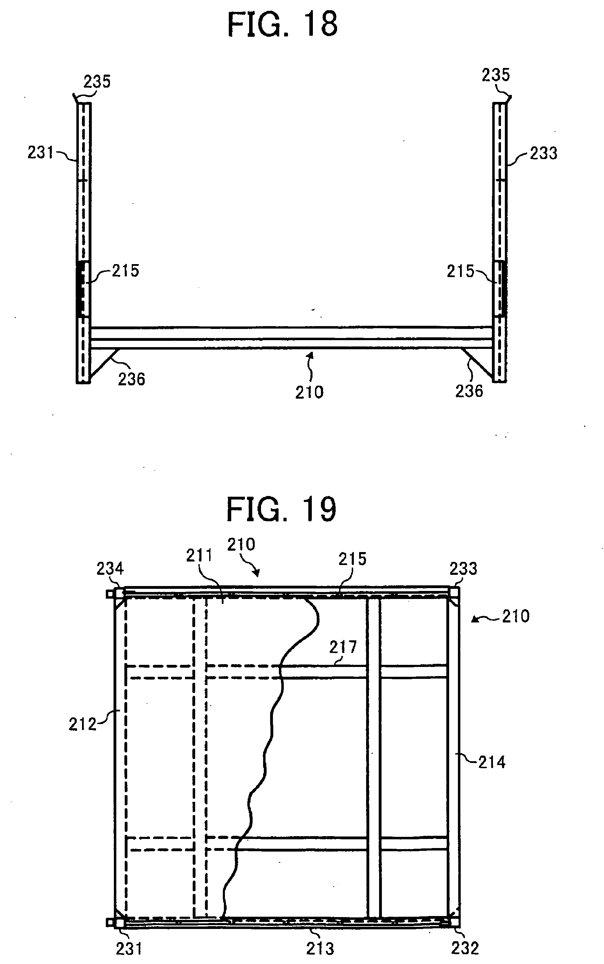

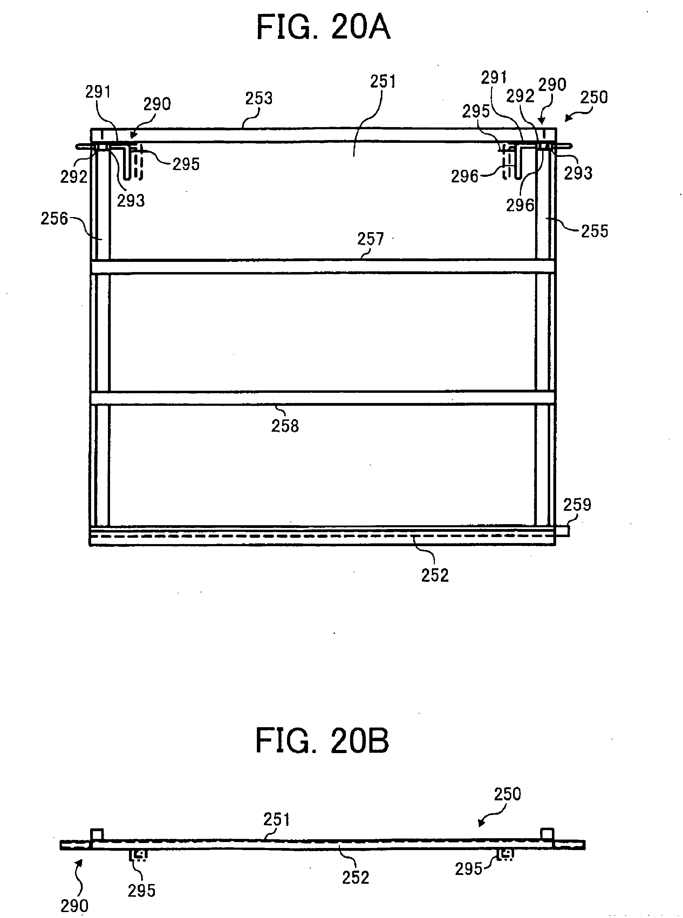

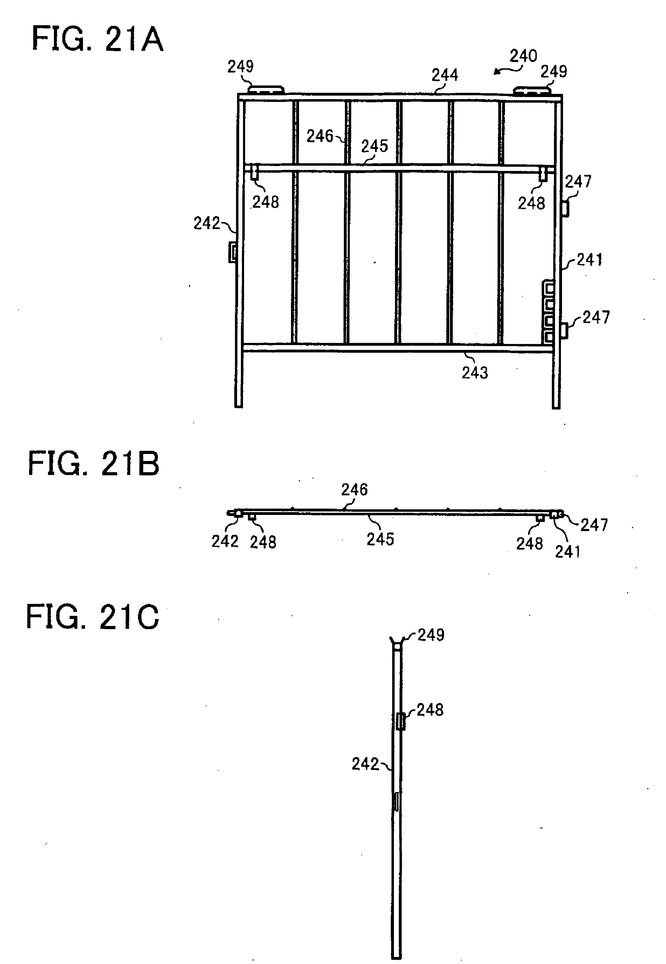

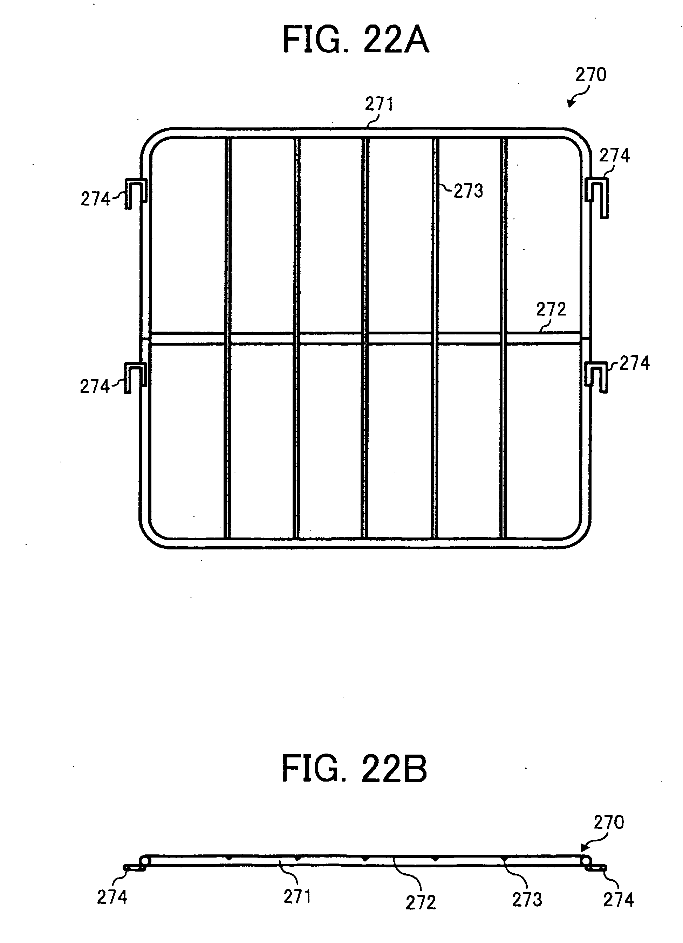

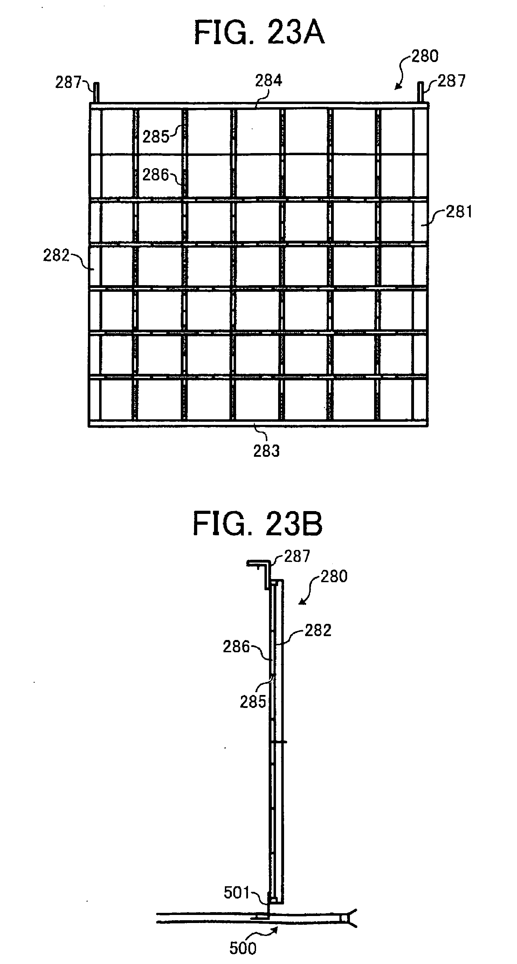

Fig. 17 is a side view of the bottom base of a packaging device according to a second embodiment of the present invention. Fig. 18 is a front view of the bottom base of the packaging device according to the second embodiment. Fig. 19 is a plan view of the bottom base of the packaging device according to the second embodiment. Figs. 20A and 20B depict a front plate of the packaging device according to the second embodiment, where Fig. 20A is a front view and Fig. 20B is a plan view. Figs. 21A to 21C depict a side plate of the packaging device according to the second embodiment: Fig. 21A is a front view; Fig. 21B is a plan view; and Fig. 21C is a side view. Figs. 22A and 22B depict a rear plate of the packaging device according to the second embodiment: Fig. 22A is a back view; and Fig. 22B is a plan view. Figs. 23A and 23B are side views of the top plate member of the packaging device according to the second embodiment.

A packaging device 200 according to the second embodiment is made of a steel material, and includes a bottom base 210, lower side members 230, the upper side members 240, the front member 250, the rear member 270, and the top plate member 280. According to the second embodiment, the left and right upper side members 240, the front member 250, the rear member 270, and the top plate member 280 are formed so as to be freely assembled and disassembled with respect to the bottom base 210. According to the second embodiment, since the configuration of the mounting base and the buffer member are the same as those according to the first embodiment, detailed explanation thereof is omitted.

In the bottom base 210, as shown in Figs. 17, 18, and 19, frames 212, 213, 214, and 215 are arranged on four sides of a rectangular plate member 211, and reinforcing members 217 and 218 are arranged on the underside of the plate member 211 in a pattern in the shape of a well crib. According to the second embodiment, legs 261, 262, and 263 are arranged below the bottom base 210, to form a fork inserting portion of the forklift. Reference numeral 236 in Fig. 19 denotes a reinforcing corner plate.

According to the second embodiment, pillar members include lower pillar members 231, 232, 233, and 234 arranged on the bottom base 210, and two pairs of, in total four, upper pillar members 241 and 242 (since two upper pillar members constituting the right side member are not shown in Fig. 19, reference numerals thereof are omitted) constituting the upper side members 240 to be detachably provided thereon.

Left and right side members are respectively formed of the lower side member 230 provided between the lower pillar members 231 and 232 on the bottom base 210, and a detachable upper side member 240. The left side member has the same configuration.

Lower pillar members 231, 232, 233, and 234 made of a square pipe are upright on four corners of the bottom base 210. These lower pillar members 231, 232, 233, and 234 constitute a lower part of the pillar members arranged at four corners of the packaging device 200.

The lower side member 230 is formed of a crossbar 243 provided between the upper ends of the lower pillar members 231 and 232, and five linear members 234 provided between the crossbar 243 and the frame 213. Reference numeral 216 in Fig. 17 denotes a belt securing unit that secures a belt for fixing the product 10, and 235 denotes a guide plate of the upper side member 240. The guide plate 235 serves as a guide at the time of stacking the bottom base 210.

The front member 250 is formed, as shown in Figs. 20A and 20B, by arranging the reinforcing members 255 and 256 on four sides of a rectangular plate member 251, and arranging the reinforcing bars 257 and 258 horizontally. A shaft member 259 is provided in the lower part of the front member 250, which becomes an axis of rotation, when the front member 250 is rotated and used as the tilted table. Locking devices 290 that fix the front member 250 are provided in the upper part of the front member 250. According to the second embodiment, the locking devices 290 have the same structure as that of the first embodiment, and include a handle 291, supports 292 and 293, a handle fixing member 295, a spring 296 for pushing out the handle, and a handle holder 297.

The upper side member 240 is formed, as shown in Figs. 21A to 21C, by providing crossbars 243, 244, and 245 between the upper pillar members 241 and 242 in upper, middle, and lower positions, and arranging five linear members 246 longitudinally. According to the second embodiment, the lower parts of the upper pillar members 241 and 242 are inserted into the lower pillar members 231 and 232 and fixed therein, to constitute the side member together with the lower side member 230. Reference numeral 247 in Figs. 21A and 21B denotes a fitting guide for fitting the rear member 270, and 248 denotes a fitting guide for fitting the top plate member 280.

As shown in Fig. 23B, on the right upper side member 500, a latching step 501 in a flange form for mounting the top plate member is provided, instead of the fitting guide 248.

The rear member 270 is formed by, as shown in Figs. 22A and 22B, providing a crossbar 272 on a frame 271 obtained by forming a round bar in a substantially square ring, and arranging five linear members 273 vertically between the frame 271. Reference numeral 274 denotes a hook to be inserted into the fitting guide 247 of the upper side member 240.

The top plate member 280 is formed of, as shown in Fig. 23A and 23B, frames 281, 282, 283, and 284 forming four sides, and linear members 285 and 286 provided between opposite frames and arranged in a lattice shape. According to the second embodiment, the frame 284 includes engagement members 287 to be inserted into the fitting guides 248 of the upper side member 240. According to the second embodiment, the engagement members 287 of the top plate member 280 are engaged with the fitting guides 248 of the upper side members 240, on the side including the engagement members 287, and on the opposite side, as shown in Fig. 23B, the top plate member 280 is mounted on the latching steps 501 provided on the upper side members 500.

According to the second embodiment, in a state where the product 10 is unloaded, the front member 250 and the rear member 270 detached from the bottom base 210, the upper side members 240, and the top plate member 280 can be mounted on the bottom base 210 in a compact form, in addition to the effects of the packaging device according to the first embodiment.

Fig. 24 is a plan view of an arrangement example of PET-bottles in a packaging device according to a third embodiment of the present invention. Figs. 25A to 25F are perspective views of an unloading state of and an unloading procedure in the packaging device according to the third embodiment. As the packaging device according to the third embodiment, the packaging devices 100 and 200 shown in the first and the second embodiments can be used.

According to the third embodiment, as shown in Fig. 24, the buffer 300 arranged between two side members of the packaging device and the article is used as the buffer. As the buffer 300, a plurality of PET-bottles 330, which are airtight containers, with a gas being sealed in a hollow box member 310, are arranged along the apparatus with the caps being arranged upward. According to this configuration, the bodies of the PET-bottles in the buffer 300 can absorb the impacts from the side of the packaging device, with respect to lateral vibrations.

According to an embodiment of the present invention, not only the impact against the article, which occurs during transportation, can be alleviated by the buffer, but also the packaging device can be used repeatedly. Accordingly, the investment for plant and equipment, the cost, and the time of packaging can be reduced, and parts control can be facilitated. Furthermore, the PET-bottles are not disposed of as a waste and can be reused, fixation and releasing of the front member with respect to the packaging device can be performed by an easy operation, and the front member can be easily used as an unloading slope.

## Claims

1. A packaging device comprising:
a bottom base (210) that includes legs (261, 262, 263) on an underside thereof;
two side members (240) attached to the bottom base (210) to form left and right side walls;
a rear member (140, 270) attached to the bottom base (210) and to the two side members (240) to form a rear wall;
a buffer member (170) arranged on the bottom base (210) and formed of a plurality of airtight containers (171) in which gas is filled;
a mounting base (180) arranged on the buffer member (170), on which an article is mounted; **characterized in that**
a front member (250) is rotatably provided on the bottom base (210) rotatable between a position that the front member (250) is used as a sliding plate on which the article slides down and a position in which the front member (250) is placed on the mounting base (180);
a top plate member (280, 610) is provided over the mounting base (180) wherein the top plate member (280, 610) includes engagement members (287) and the engagement members (287) of the top plate member (280, 610) are engaged with fitting guides (248) of the side members (240); and
a sliding guide (622) is provided at two side members (240) so as for the top plate member (280, 610) to be slidable.

2. The packaging device according to claim 1,
wherein
the sliding guide (622) has a regulator (623) that regulates movements of the top plate member (280, 610).

3. The packaging device according to claim 1 or 2,
further comprising a belt (640) that is configured to engage at an engaging portion of the bottom base (210) so that the belt (640) holds up the top plate member (280, 610), two side members (240), and top plate member (280,610) piled on the mounted base (180) as well as to tie up the article.

4. The packaging device according to claim 1,
wherein
the bottom base (210) has lower side members (230) on each of right and left sides thereof, and
the two side members (240) are detachably attached to upper portions of the lower side members (230).

5. The packaging device according to claim 4,
wherein
the lower side member (230) has a guide plate (235) that guides the bottom base (210) for piling the bottom base (210).

## Patentansprüche

1. Verpackungsvorrichtung, die umfasst:
eine untere Basis (210), die an ihrer Unterseite Beine (261, 262, 263) aufweist;
zwei seitliche Glieder (240), die an der unteren Basis (210) befestigt sind, um eine linke und eine rechte Seitenwand zu bilden;
ein hinteres Glied (140, 270), das an der unteren Basis (210) und an den zwei seitlichen Gliedern (240) befestigt ist, um eine hintere Wand zu bilden;
ein Pufferglied (170), das an der unteren Basis (210) angeordnet ist und aus mehreren luftdichten Behältern (171), in die Gas gefüllt ist, gebildet ist;
eine Montagebasis (180), die an dem Pufferglied (170) angeordnet ist und an der ein Artikel montiert ist;
**dadurch gekennzeichnet, dass**
ein vorderes Glied (250) an der unteren Basis (210) drehbar vorgesehen ist und zwischen einer Position, in der das vordere Glied (250) als eine Gleitplatte verwendet wird, auf der der Artikel abwärts gleitet, und einer Position, in der das vordere Glied (250) an der Montagebasis (180) angeordnet ist, drehbar ist;
ein oberes Plattenglied (280, 610) über der Montagebasis (180) vorgesehen ist, wobei das obere Plattenglied (280, 610) Eingriffglieder (287) aufweist und die Eingriffglieder (287) des oberen Plattenglieds (280, 610) mit Passführungen (248) der seitlichen Glieder (240) in Eingriff sind; und
eine Gleitführung an den zwei seitlichen Gliedern (240) vorgesehen ist, damit das obere Plattenglied (280, 610) gleiten kann.

2. Verpackungsvorrichtung nach Anspruch 1,
wobei
die Gleitführung (622) einen Regulierer (623) besitzt, der Bewegungen des oberen Plattenglieds (280, 610) reguliert.

3. Verpackungsvorrichtung nach Anspruch 1 oder 2,
die ferner einen Riemen (640) umfasst, der konfiguriert ist, um an einem Eingriffabschnitt der unteren Basis (210) in Eingriff zu gelangen, so dass der Riemen (640) das obere Plattenglied (280, 610), zwei seitliche Glieder (240) und ein oberes Plattenglied (280, 610), die auf der Montagebasis (180) gestapelt sind, hält, und um den Artikel zusammenzubinden.

4. Verpackungsvorrichtung nach Anspruch 1,
wobei
die untere Basis (210) sowohl auf ihrer linken als auch auf ihrer rechten Seite untere seitliche Glieder (230) besitzt und
die zwei seitlichen Glieder (240) an oberen Abschnitten der unteren seitlichen Glieder (230) abnehmbar befestigt sind.

5. Verpackungsvorrichtung nach Anspruch 4,
wobei
das untere seitliche Glied (230) eine Führungsplatte (235) besitzt, die die untere Basis (210) führt, um die untere Basis (210) zu stapeln.

## Revendications

1. Dispositif d'emballage comportant :
une base inférieure (210) qui comprend des pattes (261, 262, 263) sur sa face inférieure ;
deux éléments latéraux (240) fixés sur la base inférieure (210) afin de former des parois latérales gauche et droite ;
un élément arrière (140, 270) fixé sur la base inférieure (210) et sur les deux éléments latéraux (240) afin de former une paroi arrière ;
un élément amortisseur (170) disposé sur la base inférieure (210) et formé à partir d'une multiplicité de récipients étanches à l'air (171) dans lesquels on introduit du gaz ;
une base de montage (180) disposée sur l'élément amortisseur (170), sur laquelle un article est monté ;
**caractérisé en ce que**
un élément avant (250) est prévu de façon rotative sur la base inférieure (210) pouvant tourner entre une position telle que l'élément avant (250) est utilisé comme une plaque coulissante dans laquelle l'article coulisse vers le bas et une position dans laquelle l'élément avant (250) est placé sur la base de montage (180) ;
un élément de plaque supérieure (280, 610) est prévu au-dessus de la base de montage (180), l'élément de plaque supérieure (280, 610) comprenant des éléments d'engagement (287) et les éléments d'engagement (287) de l'élément de plaque supérieure (280, 610) étant engagés avec des guides de montage (248) des éléments latéraux (240) ; et
un guide coulissant (622) est prévu au niveau des deux éléments latéraux (240) de façon à ce que l'élément de plaque supérieure (280, 610) puisse coulisser.

2. Dispositif d'emballage selon la revendication 1, dans lequel le guide coulissant (622) a un régulateur (623) qui régule des mouvements de l'élément de plaque supérieure (280, 610)'.

3. Dispositif d'emballage selon la revendication 1 ou 2, comportant en outre une courroie (640) qui est configurée de façon à engager au niveau d'une partie d'engagement de la base inférieure (210) de telle sorte que la courroie (640) maintient l'élément de plaque supérieure (280, 610), deux éléments latéraux (240), et un élément de plaque supérieure (280, 610) empilés sur la base de montage (180) afin de serrer également l'article.

4. Dispositif d'emballage selon la revendication 1, dans lequel la base inférieure (210) a des éléments latéraux inférieurs (230) sur chacun de ses côtés droit et gauche, et les deux éléments latéraux (240) sont fixés de manière démontable sur des parties supérieures des éléments latéraux inférieurs (230).

5. Dispositif d'emballage selon la revendication 4, dans lequel l'élément latéral inférieur (230) a une plaque de guidage (235) qui guide la base inférieure (210) afin d'empiler la base inférieure (210).
